# FASCICULE DE BREVET EUROPEEN

(11) **EP 2 813 962 B1**
(45) Date de publication et mention de la délivrance du brevet: **17.10.2018**
(21) Numéro de dépôt: 13172080.7
(22) Date de dépôt: 14.06.2013
(51) Int. Cl.: G06F 21/34

(54) **Méthode de contrôle d'accès à un type de services spécifique et dispositif d'authentification pour le contrôle de l'accès à un tel type de services.**
Methode der Zugangskontrolle zu einem bestimmten Typ von Diensten, und Authentifizierungsvorrichtung für die Zugangskontrolle zu einem solchen Typ von Diensten
Method for controlling access to a specific service type and authentication device for controlling access to such a service type.

(43) Date de publication de la demande: 17.12.2014
(73) Titulaire: Nagravision S.A., 1033 Cheseaux-sur-Lausanne (CH)
(72) Inventeur: Kudelski, M. Henri, 1070 Puidoux (CH)
(74) Mandataire: Wenger, Joel-Théophile

(56) Documents cités:
- WO-A2-96/00485
- Kim Il-Hyun: "Analyse von Authentisierungs- Verfahren für Online Accounts", , 15 février 2012 (2012-02-15), XP055091482, Extrait de l'Internet: URL:http://www-ti.informatik.uni-tuebingen .de/~borchert/Troja/studdiplfiles/Kim.pdf [extrait le 2013-12-04]

## Description

### DOMAINE TECHNIQUE

La présente invention concerne une méthode de contrôle d'accès à un type de services spécifique parmi une pluralité de types de services proposés par un fournisseur de services.

De façon plus détaillée, cette méthode permet de s'assurer que le fournisseur de services attribue des droits correspondant au type de services requis par un utilisateur et non des droits ayant une portée plus large que ceux permettant l'accès à ce type de services spécifique.

L'invention concerne également un dispositif d'authentification destiné à contrôler l'accès à de tels services.

### TECHNIQUE ANTERIEURE

Actuellement, de nombreux services sont proposés par des fournisseurs de services, ceux-ci étant généralement accessibles en ligne à partir de terminaux tels que notamment des ordinateurs. Pour un grand nombre de ces services, il est nécessaire d'avoir un droit d'accès et d'être identifié auprès du fournisseur. Le droit d'accès est souvent donné au détenteur d'un dispositif d'authentification qui peut avoir la forme d'une carte de type carte de crédit, ou d'un dispositif ayant par exemple la forme d'une calculette. Cette calculette contient au moins un processeur et une mémoire, de manière à être capable d'effectuer des opérations cryptographiques, de même qu'une interface permettant à l'utilisateur d'interagir avec ce dispositif d'authentification. L'identification se fait généralement à partir d'un mot de passe et/ou d'un code d'identification personnel qui est introduit par l'utilisateur dans le terminal au moyen d'une interface tel qu'un clavier alphanumérique ou numérique.

Parmi les fournisseurs d'accès proposant des services du type tels qu'exposés ci-dessus, il y a notamment les établissements financiers ou bancaires. Les services proposés sont notamment les paiements, éventuellement en différentes monnaies et la consultation du solde de comptes du titulaire.

Lorsqu'un utilisateur souhaite accéder à un service, par exemple la consultation du solde de son compte auprès d'un établissement bancaire déterminé, il commence généralement par s'identifier. Ceci peut se faire par exemple sur un site Internet de l'établissement bancaire considéré. Selon un procédé largement utilisé, lorsque l'utilisateur s'est identifié, une suite de caractères alphanumériques est affichée sur le terminal. L'utilisateur doit recopier cette suite de caractères alphanumériques sur le dispositif d'authentification qu'il possède. Le dispositif d'authentification génère une nouvelle suite de caractères alphanumériques que l'utilisateur doit reporter sur le terminal, par exemple sur le site Internet de l'établissement bancaire auquel l'accès est demandé. Le dispositif d'authentification peut être un dispositif spécifique qui n'a que cette fonction d'authentification ou peut également être un dispositif propre à l'utilisateur et ayant d'autres fonctions, tel que par exemple un téléphone portable ou une tablette tactile.

La génération de la nouvelle suite de caractères alphanumériques par le dispositif d'authentification est réalisée à partir de la première suite de caractères alphanumériques générée par le fournisseur et d'une fonction cryptographique spécifique à l'utilisateur. Le terme "fonction cryptographique" couvre l'ensemble des éléments qui permettent de chiffrer des données. Ceci englobe en particulier un algorithme et une clé de chiffrement. En fonction de l'algorithme choisi, cet ensemble peut englober d'autres éléments tels qu'un vecteur d'initialisation par exemple. Cette fonction cryptographique est connue aussi bien du fournisseur de services que du dispositif d'authentification. Le même calcul est effectué par le dispositif d'authentification et par le fournisseur de services. Si le calcul aboutit à un résultat identique dans les deux entités, l'accès au service requis est autorisé, l'utilisateur étant considéré comme authentifié. Dans le cas contraire, l'accès est refusé.

Dans les systèmes actuels, les fournisseurs proposent généralement plusieurs services différents. Typiquement, un même fournisseur peut proposer d'effectuer des paiements en plusieurs monnaies et la consultation de l'état d'un ou plusieurs comptes du titulaire. D'autres services peuvent également être envisagés, ces services pouvant très généralement être définis comme des services liés à des paiements d'une part et la consultation du solde d'un compte utilisé par ces paiements d'autre part.

Les services payants peuvent par exemple être liés à l'achat de droits d'accès à des événements de télévision à péage, des services de téléphonie mobile, l'achat de produits en ligne, etc.

Les paiements requièrent une opération de lecture et d'écriture et donc une autorisation adaptée. La simple consultation de l'état d'un compte requiert généralement uniquement une autorisation de lecture. Dans le cas où le terminal utilisé est piraté de façon à simuler une page du site Internet de l'établissement bancaire que l'utilisateur souhaite consulter, le pirate pourrait effectuer une opération de paiement nécessitant une autorisation de lecture/écriture quand bien même l'utilisateur ne souhaiterait que consulter l'état de ses comptes, nécessitant uniquement une autorisation de lecture.

Les cas de piratage comprennent notamment les cas où le terminal de l'utilisateur contient un virus permettant à une tierce personne d'accéder à des informations relatives à l'utilisation du terminal, le cas où des communications entre le terminal et le fournisseur de services sont interceptées par un tiers (connu sous le terme de "Man in the middle") et le cas où un tiers se fait passer pour le fournisseur de services (phishing).

L'objectif de la présente invention est de diminuer le risque pour l'utilisateur en cas de piratage, en empêchant toute opération nécessitant un droit de lecture/écriture lorsque l'utilisateur n'a besoin que d'un droit de lecture. Plus généralement, l'objectif de l'invention est d'attribuer des droits correspondant au service auquel l'utilisateur souhaite accéder et non des droits plus étendus ou différents.

Le document XP055091482 "Analyse von Authentisierungs- Verfahren für Online Accounts". Kim II-Hyun décrit un procédé permettant de diminuer le risque pour l'utilisateur, en cas de piratage. Selon ce document, lorsqu'une transaction doit être effectuée, et plus précisément lorsqu'un versement doit être fait sur un compte identifié par un numéro de compte, un identifiant de l'utilisateur de même qu'un identifiant du compte sur lequel le versement doit être fait, sont utilisés pour générer un code d'authentification. De cette façon, il n'est pas possible pour un pirate, d'indiquer un autre numéro de compte sur lequel effectuer le versement.

Ce procédé offre des avantages du point de vue de la sécurité, mais présente certains inconvénients pour l'utilisateur. Par exemple lorsqu'un utilisateur souhaite effectuer plusieurs versements sur différents comptes, il doit, pour chaque versement, recommencer la procédure d'identification, ce qui peut être fastidieux. De plus, comme le numéro du compte doit être introduit pour que l'identification soit réussie, il faut que l'utilisateur connaisse ce numéro de compte. Il ne peut donc pas utiliser des informations mémorisées dans un espace lié à cet utilisateur. Finalement, ce procédé ne peut être utilisé que pour effectuer un versement sur un compte.

Selon la demande de brevet WO 96/00485, l'utilisateur dispose d'une unité d'utilisateur qui lui est propre. Cette unité d'utilisateur est équipée de moyens pour recevoir un "Challenge", d'une unité de calcul et d'une interface permettant à un utilisateur d'introduire un cde d'identification personnel (PIN). Lorsque l'utilisateur souhaite accéder à un service, il requiert un challenge, puis il introduit son code d'identification personnel. Le challenge et le code d'identification personnel sont introduits dans l'unité de calcul et un code de réponse est calculé en utilisant les deux valeurs d'entrée et un algorithme mémorisé dans le dispositif. Ce code de réponse est envoyé à un fournisseur de services qui calcule un code de réponse à partir des mêmes données. Si le code calculé par le fournisseur de services est identique au code de réponse reçu de la part de l'utilisateur, l'accès au service et autorisé.

Ce document ne mentionne pas le regroupement de services en types de services requérant des autorisations différentes.

### EXPOSE DE L'INVENTION

Le but de l'invention est atteint par une méthode de contrôle d'accès à un type de services spécifique parmi une pluralité de types de services proposés par un fournisseur de services, cette méthode comportant les étapes suivantes :
- introduction dans un dispositif d'authentification de cet utilisateur, d'un code d'identification personnel spécifique à cet utilisateur, ce code d'identification personnel étant identique pour au moins deux types de services distincts proposés par le fournisseur de services;
- indication par ledit utilisateur dudit type de services spécifique auquel l'accès est requis, cette indication étant faite dans le dispositif d'authentification;
cette méthode étant caractérisée en ce qu'elle comporte en outre les étapes de :
- transformation dudit code d'identification personnel dans le dispositif d'authentification, de façon dépendant au moins d'une fonction cryptographique spécifique audit utilisateur et audit type de services spécifique requis, cette fonction cryptographique étant mémorisée dans le dispositif d'authentification;
- transmission du résultat de la transformation dudit code d'identification personnel au fournisseur de services;
- authentification de l'utilisateur par le fournisseur de services, au moyen du résultat transmis de ladite transformation;
- attribution ou refus d'attribution par le fournisseur de services, du droit d'accès audit type de services spécifique requis en fonction du résultat de l'authentification.

Le but de l'invention est également atteint par un dispositif d'authentification pour le contrôle d'accès à un type de services spécifique parmi une pluralité de types de services proposés par un fournisseur de services, ce dispositif comportant au moins un processeur et une mémoire agencés pour mettre en oeuvre au moins deux fonctions cryptographiques distinctes, et une interface agencés pour sélectionner au moins un type de services parmi ladite pluralité de services.

Cette invention s'applique dans le cas où l'utilisateur a le choix entre différents services ou types de services qui requièrent des droits différents appliqués à un même ensemble de données. L'invention permet d'assurer que les droits attribués par le fournisseur de services à un utilisateur qui requiert l'accès à un service spécifique correspondent effectivement aux droits nécessaires et suffisants pour accéder au service requis. De cette manière, si un tiers se fait passer pour un fournisseur de services ou usurpe l'identité d'un utilisateur autorisé, il ne lui sera pas permit de réaliser des opérations ou d'accéder à des services requérant des droits plus larges que ceux nécessaires pour accéder aux services requis par l'utilisateur. En particulier, il n'est pas possible pour un pirate d'accéder à des services tels que des paiements en ligne alors que l'utilisateur ne souhaite qu'accéder à la visualisation du statut de ses comptes.

Cette invention s'applique essentiellement lorsqu'un utilisateur accède à des services du fournisseur de services à partir d'un terminal tel qu'un ordinateur, connecté à ce fournisseur au moyen d'un réseau informatique tel qu'Internet. L'utilisateur doit être enregistré auprès de ce fournisseur pour avoir accès aux services. A chaque utilisateur correspond un ensemble de données telles que par exemple ses comptes enregistrés auprès du fournisseur de services.

Le procédé selon l'invention permet d'attribuer à un même ensemble de données, différents droits en fonction du type de services auquel l'utilisateur souhaite accéder, un type de service correspondant à un type d'utilisation de ces données. L'invention n'est donc pas destinée à permettre l'accès pour un utilisateur déterminé, à différents ensembles de données dépendant du service requis, mais plutôt à différents services qui utilisent le même ensemble de données pour un utilisateur déterminé.

### DESCRIPTION SOMMAIRE DES DESSINS

La présente invention et ses avantages seront mieux compris en référence aux figures annexées et à la description détaillée d'un mode de réalisation particulier, dans lesquelles :
- la figure 1 est une vue d'un dispositif d'authentification de l'invention;
- la figure 2 est une vue schématique d'un premier mode de réalisation de la méthode de l'invention; et
- la figure 3 représente sous forme de schéma bloc, un deuxième mode de réalisation de la méthode de l'invention.

### MANIERES DE REALISER L'INVENTION

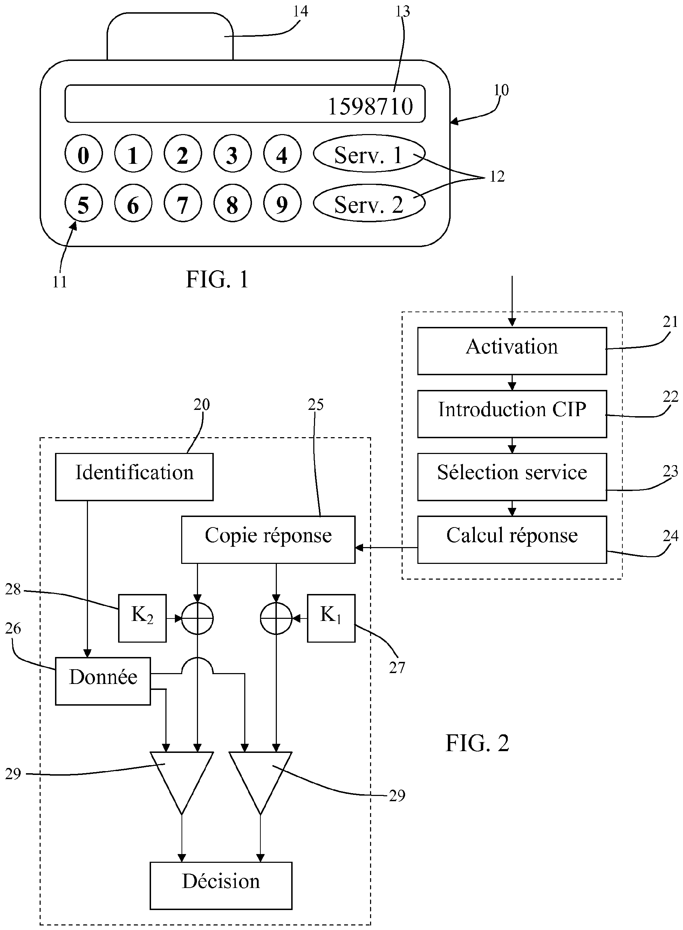

En référence aux figures, il est supposé qu'un utilisateur disposant d'un dispositif d'authentification 10 tel qu'illustré par la figure 1 a la possibilité d'accéder à différents services ou types de services proposés par un établissement bancaire. Les services proposés peuvent par exemple être le paiement à partir d'un compte, le transfert d'un montant d'un compte de l'utilisateur sur un autre compte du même utilisateur, la consultation de l'état d'un compte, etc.

Les types de service peuvent être regroupés en fonction des droits qui sont nécessaires pour accéder à ces services. A titre d'exemple, les opérations nécessitant une autorisation de lecture/écriture, telles que les paiements, le transfert d'argent, les achats en ligne, ... sont regroupés dans un premier type de services. Les opérations nécessitant une autorisation de lecture uniquement, comme la consultation d'un compte ou d'un solde sont regroupés dans un deuxième type de services. Dans les exemples décrits ici, seul ces deux types de services ont été définis. Il est clair que l'invention n'est pas limitée à ces exemples.

Le dispositif d'authentification illustré par la figure 1 se présente sous la forme d'un boîtier comportant un clavier alphanumérique 11, des touches de sélection 12 permettant la sélection des services proposés par le fournisseur, un affichage 13 et généralement, mais pas obligatoirement, un lecteur de carte de type carte à puce agencé pour recevoir un module de sécurité qui est représenté ici sous la forme d'une carte à puce 14.

Le dispositif d'authentification 10 comprend en outre un processeur et une mémoire capables d'exécuter au moins une fonction cryptographique par type de services accessible par l'utilisateur. Pour ceci, le dispositif d'authentification peut contenir plusieurs clés différentes et/ou plusieurs algorithmes de chiffrement différents, éventuellement une liste ordonnée de vecteurs d'initialisation, etc. Des fonctions cryptographiques différentes sont définies comme des fonctions aboutissant à des résultats différents lorsqu'elles sont appliquées à une même valeur initiale ou un même ensemble de valeurs initiales.

Dans le cas où le dispositif d'authentification comprend un lecteur de carte, la carte correspondante de l'utilisateur est considérée comme faisant partie du dispositif d'authentification 10.

Dans les différents exemples décrits, l'utilisateur se connecte à distance au fournisseur de services, par exemple en accédant à un site Internet à partir d'un terminal d'ordinateur.

### Exemple 1

Cet exemple est décrit en référence à la figure 2. Lorsque l'utilisateur s'est connecté au fournisseur de services par son site Internet, cet utilisateur doit ensuite s'identifier après du site. Cette identification, correspondant à une étape 20 sur la figure 2, peut se faire de façon conventionnelle, au moyen d'un nom et/ou d'un numéro d'identification par exemple. A ce stade, il est possible que l'établissement bancaire demande un identifiant complémentaire tel qu'un numéro de contrat par exemple.

Si le numéro de contrat correspond à l'identifiant de la personne, le procédé peut se poursuivre. Au contraire, si le numéro de contrat ne correspond pas à l'identifiant indiqué en premier lieu, un message d'erreur peut être affiché à destination de l'utilisateur. Il est possible par exemple de laisser à l'utilisateur la possibilité d'essayer trois identifiant différents avant de bloquer l'accès au service. Si l'utilisateur n'a pas besoin d'introduire un identifiant complémentaire, une identification réussie suffit à permettre la poursuite du déroulement de la méthode.

Parallèlement à ceci, l'utilisateur doit activer son dispositif d'authentification, lors d'une étape 21. Ceci peut se faire de plusieurs manières. Selon l'une d'elles, une carte à puce est introduite dans le lecteur du dispositif d'authentification. L'utilisateur introduit un code d'activation ou un mot de passe au moyen du clavier alphanumérique. Il est ensuite vérifié si ce code d'activation correspond à un code mémorisé dans le dispositif d'authentification, c'est-à-dire soit dans une mémoire de la carte, soit dans une mémoire intégrée au boîtier.

Il est à noter que les mots de passe ne sont généralement pas mémorisés en clair, mais sous une forme chiffrée. De façon conventionnelle, ce qui est mémorisé est le résultat d'une fonction à sens unique appliquée au mot de passe. Lorsque le dispositif d'authentification est activé, il est demandé à l'utilisateur d'introduire un code d'identification personnel lors d'une étape 22.

Une autre manière d'activer le dispositif d'authentification consiste à introduire directement le code d'identification personnel, sans introduction préalable d'un mot de passe.

Le code d'identification personnel est introduit au moyen d'une interface telle que le clavier alphanumérique 11 du dispositif d'authentification 10. Ce code ou un dérivé de ce code peut être mémorisé dans le dispositif d'authentification. Si le code d'identification personnel introduit par l'utilisateur correspond au code mémorisé, la méthode peut se poursuivre. De façon conventionnelle, il est généralement laissé à l'utilisateur trois possibilités d'introduire un code correct avant que le dispositif ne se bloque et empêche une utilisation ultérieure.

Lorsque le dispositif d'authentification est actif et que l'utilisateur a introduit son code d'identification personnel, l'utilisateur doit sélectionner, lors d'une étape 23, le type de services auquel il veut accéder. Pour ceci, le dispositif d'authentification comporte des moyens pour sélectionner un service ou un type de services auquel l'utilisateur souhaite accéder. Dans le mode de réalisation illustré, le dispositif d'authentification comporte deux touches 12, l'une pour effectuer un paiement, ce qui nécessite une autorisation de lecture/écriture et l'autre pour consulter l'état de comptes, ce qui nécessite uniquement une autorisation de lecture. L'utilisateur indique donc, en pressant sur la touche correspondante, à quel service il souhaite accéder.

Le dispositif d'authentification comprend une fonction cryptographique associée à chaque service ou type de services ou en d'autres termes, une fonction cryptographique associée à chacune des touches de sélection de service. La sélection par l'utilisateur, du type de services auquel il souhaite accéder permet donc de déterminer la fonction cryptographique qui va être utilisée pour la suite de la méthode.

Cette méthode se poursuit par le calcul d'une réponse lors d'une étape 24. Cette réponse dépend au moins du code d'identification personnel et de la fonction cryptographique correspondant au type de services sélectionné par l'utilisateur. Elle peut également tenir compte d'autres paramètres. Cette réponse peut être calculée de nombreuses façons différentes, bien connues de l'homme du métier. A titre d'exemple, la réponse pourrait être un hash à clé du code d'identification personnel, la clé étant une clé spécifique à la fonction cryptographique déterminée lors de l'étape de sélection du type de services ou une clé dérivée de celle-ci.

La réponse est affichée sur l'affichage du dispositif d'authentification, généralement sous la forme d'un code alphanumérique.

La réponse affichée sur le dispositif d'authentification doit ensuite être recopiée, lors d'une étape 25, sur le site Internet du fournisseur de services. Cette réponse peut être copiée manuellement ou transmise par un moyen de communication local au terminal en communication avec le fournisseur de services. La transmission peut se faire au moyen d'une connexion avec ou sans fil tel que bluetooth.

Le fournisseur doit procéder à l'authentification de l'utilisateur. Pour ceci, il dispose des données d'identification 26 qui ont été introduites lors de la connexion de l'utilisateur au fournisseur de services. Ces données d'identification permettent au fournisseur de connaître les différents paramètres utilisables par le dispositif d'authentification pour calculer une réponse. Ces paramètres sont au moins le code d'identification personnel de l'utilisateur et les fonctions cryptographiques associées à cet utilisateur.

Dans l'exemple illustré par la figure 1, le fournisseur de services n'est pas en mesure de déterminer quelle fonction cryptographique a été utilisée par le dispositif d'authentification.

Le fournisseur de services calcule plusieurs réponses, à savoir une réponse par fonction cryptographique associée au dispositif d'authentification concerné. Il obtient ainsi deux résultats différents dans le cas où le dispositif d'authentification dispose de deux fonctions cryptographiques 27, 28 différentes. Chacun des résultats est comparé, lors d'une étape 29, au résultat que l'utilisateur a introduit à partir du dispositif d'authentification. Si l'un de ces deux résultats aboutit à une identité, le fournisseur de services détermine laquelle des fonctions cryptographiques a aboutit à cette identité. L'accès aux services associés à la fonction cryptographique ayant aboutit à cette identité est autorisé. Il est clair que si aucune des clés n'aboutit à une identité, l'accès aux services est refusé.

Selon une variante, il est possible que le fournisseur de services calcule une première réponse, puis compare le résultat obtenu avec la réponse du dispositif d'authentification. Si ces résultats sont identiques, il ne calcule pas la deuxième réponse. Si les résultats ne sont pas identiques, le fournisseur de services calcule une réponse avec une autre fonction cryptographique et compare le résultat avec la réponse provenant du dispositif d'authentification. Il procède ainsi jusqu'à soit qu'il ait obtenu une réponse identique à la réponse du dispositif d'identification, soit qu'il ait testé toutes les fonctions cryptographiques dont il dispose pour cet utilisateur. Si aucune des fonctions cryptographiques ne donne un résultat de la comparaison positif, l'accès au service refusé.

### Exemple 2

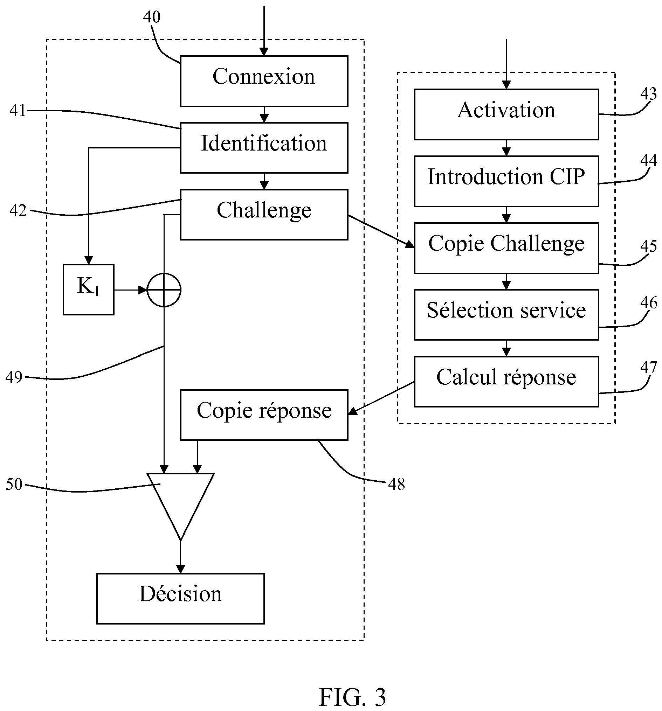

Selon le mode de réalisation décrit dans cet exemple et illustré par la figure 3, l'utilisateur se connecte à distance au fournisseur de services, lors d'une étape 40, par exemple en accédant à un site Internet à partir d'un terminal d'ordinateur. Il s'identifie ensuite sur ce site lors d'une étape 41. Cette identification peut se faire de façon conventionnelle, au moyen d'un nom et/ou d'un numéro d'identification par exemple. A ce stade. Il est possible que l'utilisateur doive en outre entrer un identifiant complémentaire tel qu'un numéro de contrat.

Si le numéro de contrat correspond à l'identifiant de la personne, le procédé peut se poursuivre. Au contraire, si le numéro de contrat ne correspond pas à l'identifiant indiqué en premier lieu, un message d'erreur peut être affiché à destination de l'utilisateur. S'il n'y a pas de numéro de contrat à introduire, l'identification seule suffit.

Lorsque l'établissement bancaire a identifié l'utilisateur, le terminal affiche un code alphanumérique, dénommé "Challenge" qui peut être une valeur aléatoire générée par le fournisseur de services. Ceci correspond à une étape 42.

Parallèlement à ceci, lors d'une étape 43, l'utilisateur doit activer son dispositif d'authentification comme dans l'exemple précédent, c'est-à-dire au moins introduire son code d'identification personnel lors d'une étape 44. Si le code d'identification personnel introduit par l'utilisateur est correct, la méthode peut se poursuivre. Selon une variante, l'exactitude du code d'identification personnel est vérifiée en comparant ce code à un code mémorisé dans le dispositif d'authentification. Selon une variante préférée le code d'identification personnel n'est pas mémorisé tel quel dans le dispositif d'authentification. Le dispositif d'authentification stocke plutôt une valeur résultant d'une opération sur ce code d'identification personnel. Cette opération peut typiquement être une fonction à sens unique telle qu'une fonction de hachage. De cette manière, même si une personne mal intentionnée arrive à lire la valeur stockée sur le dispositif d'authentification, elle ne pourra pas en déduire le code d'identification personnel.

Lorsque le dispositif d'authentification est actif et que le code d'identification personnel a été introduit correctement, l'utilisateur doit introduire le "Challenge" au moyen de l'interface. Ce "Challenge" peut être recopié manuellement par l'utilisateur ou il peut être transmis par des moyens de communication. Ceci correspond à une étape 45. À titre d'exemple, le challenge peut-être reçu par des moyens de communication à distance telle que par un téléphone portable, par une communication locale du type Bluetooth ou infrarouge, ou par une communication câblée du type USB par exemple.

Lorsque l'utilisateur a recopié le challenge, il doit sélectionner le service souhaité, lors d'une étape 46. Pour ceci, il procède comme dans le mode de réalisation expliquée dans l'exemple 1, en utilisant les touches de sélection.

Comme dans l'exemple précédent, le dispositif d'authentification comprend une fonction cryptographique associée à chaque service ou type de services ou en d'autres termes, une fonction cryptographique associée à chacune des touches de sélection de service. La sélection par l'utilisateur, du type de services auquel il souhaite accéder permet donc de déterminer la fonction cryptographique qui va être utilisée pour la suite de la méthode.

Le procédé se poursuit par le calcul d'une réponse au "Challenge", lors d'une étape 47. Cette réponse est une fonction qui dépend au moins du "Challenge" et de la clé de chiffrement déterminée lors de la sélection du type de services requis par l'utilisateur. Elle peut également tenir compte d'autres paramètres. En particulier, la réponse tient généralement compte du code d'identification personnel introduit par l'utilisateur. Selon un mode de réalisation particulier, elle peut également comprendre un numéro de compte ou de contrat de l'utilisateur. Cette réponse peut être calculée de nombreuses façons différentes, bien connues de l'homme du métier. A titre d'exemple, la fonction pourrait être un hash à clé du "Challenge" et du code d'identification personnel, la clé étant celle déterminée lors de l'étape 46 de sélection du type de services ou une clé dérivée de celle-ci. A cette réponse, il est possible que le dispositif d'authentification ajoute une donnée dont la fonction est d'indiquer quel type de services a été sélectionné par l'utilisateur ou en d'autres termes, quelle clé a été utilisée lors du calcul de la réponse au "Challenge". La réponse à laquelle ladite donnée a été ajoutée est dénommée ici "réponse augmentée" et son utilité est expliquée plus en détail ci-dessous.

La réponse ou, comme dans cet exemple, la réponse augmentée est affichée sur l'affichage du dispositif d'authentification, généralement sous la forme d'un code alphanumérique.

La réponse augmentée affichée sur le dispositif d'authentification doit ensuite être recopiée, lors d'une étape 48, sur le site Internet du fournisseur de services.

Pour obtenir cette réponse augmentée, de nombreuses variantes sont envisageables. L'une d'elle consiste à ajouter au résultat de la fonction de calcul de la réponse au "Challenge", un champ spécifique qui peut contenir deux valeurs distinctes, par exemple 0 ou 1. De façon plus générale, le champ devrait pouvoir contenir au moins autant de valeurs distinctes qu'il y a de fonctions cryptographiques possibles ou de types de services distincts. Selon une variante, il est possible que le champ contienne un bit qui peut être mis à zéro ou à un et qui transforme le résultat de cette fonction en une valeur paire ou impaire, une valeur paire correspondant à une première fonction cryptographique ou un premier type de services et une valeur impaire correspondant à une deuxième fonction cryptographique ou un deuxième type de services.

Dans le cas où le champ indique de façon directe quelle fonction cryptographique a été utilisée par le dispositif d'authentification, le fournisseur de services doit lire la valeur de ce champ et connaîtra immédiatement quelle fonction cryptographique il doit utiliser. Dans le cas où le champ est utilisé pour agir sur la parité, le fournisseur de service pourra déterminer que, si la valeur du résultat est paire, l'utilisateur a choisi un premier type de services correspondant à une première fonction cryptographique alors que si le résultat est impair, il a choisi un second type de services correspondant à une deuxième fonction cryptographique.

Il est clair que de nombreuses manières différentes d'indiquer quelle a été la fonction cryptographique utilisée par le dispositif d'authentification sont envisageables.

Il est à noter que, de façon conventionnelle, les calculs sont effectués en mode binaire. Le "Challenge" et la réponse sont par contre affichés sous forme alphanumérique. Il y a donc une conversion du mode binaire en mode alphanumérique. Le champ additionnel utilisé pour indiquer la fonction cryptographique à utiliser n'est donc pas visible en tant que tel par l'utilisateur.

Dans le cas où le fournisseur de services est en mesure de déterminer quel type de services a été choisi par l'utilisateur, ce qui correspond au cas où l'information introduite sur le site du fournisseur de services est la réponse "augmentée", ce fournisseur sera en mesure de déterminer quelle fonction cryptographique est associée à ce type de services. Le fournisseur de service pourra donc utiliser cette fonction cryptographique pour calculer une réponse au "Challenge", en appliquant la même fonction que celle qui a été appliquée par le dispositif d'authentification. Ceci correspond à une étape 49. Le fournisseur de services pourra alors comparer le résultat obtenu par calcul avec le résultat recopié depuis le dispositif d'authentification ou plus précisément avec la partie du résultat augmenté duquel a été supprimée la donnée ajoutée. Ceci correspond à une étape 50. Si ces résultats sont identiques, l'accès à un service correspondant au type de services choisi par l'utilisateur est autorisé. En cas de non identité des résultats, l'accès aux services est en principe refusé.

Le procédé selon l'invention assure une plus grande sécurité lors de l'accès à des opérations nécessitant un niveau de sécurité important, typiquement des opérations financières. En effet, grâce à ce procédé, l'utilisateur peut requérir les droits les plus restrictifs dont il ait besoin, ce qui permet d'empêcher un tiers de disposer de droits plus étendus pour effectuer des opérations que l'utilisateur légitime ne souhaite pas effectuer.

## Revendications

1. Méthode de contrôle d'accès à un type de services spécifique parmi une pluralité de types de services proposés par un fournisseur de services, cette méthode comportant les étapes suivantes
• introduction dans un dispositif d'authentification de cet utilisateur, d'un code d'identification personnel spécifique à cet utilisateur, ce code d'identification personnel étant identique pour au moins deux types de services distincts proposés par le fournisseur de services, les services accessibles à partir d'un type de services étant regroupés en fonction de droits qui sont nécessaires pour accéder à ces services;
• indication par ledit utilisateur dudit type de services spécifique auquel l'accès est requis, cette indication étant faite dans le dispositif d'authentification;
• transformation dudit code d'identification personnel dans le dispositif d'authentification, de façon dépendant au moins d'une fonction cryptographique spécifique audit utilisateur et audit type de services spécifique requis, cette fonction cryptographique étant mémorisée dans le dispositif d'authentification;
• transmission du résultat de la transformation dudit code d'identification personnel au fournisseur de services;
• authentification de l'utilisateur par le fournisseur de services, au moyen du résultat transmis de ladite transformation;
• attribution ou refus d'attribution par le fournisseur de services, du droit d'accès audit type de services spécifique requis en fonction du résultat de l'authentification.

2. Méthode de contrôle d'accès selon la revendication 1, **caractérisée en ce que** ladite fonction cryptographique comprend au moins une clé de chiffrement et un algorithme de chiffrement et **en ce que** l'étape de transformation du code d'identification personnel de façon dépendante de la fonction cryptographique comprend le chiffrement dudit code d'identification personnel par cette fonction cryptographique.

3. Méthode de contrôle d'accès selon la revendication 1, **caractérisée en ce qu'**elle comporte une étape d'introduction, dans le dispositif d'authentification, d'un "Challenge" reçu par le fournisseur de services, et **en ce que** l'étape de transformation dudit code d'identification personnel comporte une étape de calcul d'une réponse dépendant au moins dudit code d'identification personnel, de ladite fonction cryptographique spécifique audit type de services spécifique sélectionné par l'utilisateur et dudit "Challenge".

4. Méthode de contrôle d'accès selon la revendication 1 ou 3, **caractérisée en ce que** le résultat de la transformation contient une indication permettant au fournisseur de services de déterminer quel service spécifique a été sélectionné par l'utilisateur.

5. Méthode de contrôle d'accès selon la revendication 4, **caractérisée en ce que** l'étape d'authentification de l'utilisateur par le fournisseur de services comporte les étapes suivantes :
• lecture de l'indication permettant au fournisseur de services de déterminer quel type de services spécifique a été sélectionné par l'utilisateur;
• sélection le fournisseur de services de la fonction cryptographique spécifique audit utilisateur et audit type de services spécifique;
• calcul par le fournisseur de services, de la transformation dudit code d'identification personnel au moyen de la fonction cryptographique sélectionnée;
• comparaison de la valeur calculée par le fournisseur de services et de la valeur reçue à partir du dispositif d'authentification;
• autorisation d'accès audit type de services spécifique si ces valeurs sont égales et refus de l'accès si ces valeurs sont différentes.

6. Méthode de contrôle d'accès selon la revendication 1 ou 3, **caractérisée en ce qu'**elle comporte les étapes suivantes :
a) calcul par le fournisseur de services, de la transformation dudit code d'identification personnel au moyen d'une première fonction cryptographique spécifique audit utilisateur et audit type de services spécifique;
b) comparaison de la valeur calculée par le fournisseur de services et de la valeur reçue à partir du dispositif d'authentification;
c) autorisation d'accès audit type de services spécifique si ces valeurs sont égales;
• si ces valeurs sont différentes, réitération des étapes a) à c) en utilisant une fonction cryptographique différente lors de chaque itération;
• si aucunes des fonctions cryptographiques spécifiques aux types de services proposés par le fournisseur de services n'aboutit à une égalité, refus de l'accès aux services du fournisseur de services.

7. Méthode de contrôle d'accès selon la revendication 1 ou 3, **caractérisée en ce qu'**elle comporte les étapes suivantes :
• calcul par le fournisseur de services, de la transformation dudit code d'identification personnel au moyen des différentes fonctions cryptographiques spécifiques audit utilisateur et auxdits types de services proposés par ledit fournisseur de services;
• comparaison des valeurs calculées par le fournisseur de services et de la valeur reçue à partir du dispositif d'authentification;
• autorisation d'accès audit type de services spécifique si la valeur reçue à partir du dispositif d'authentification correspond à l'une des valeurs calculées par ledit fournisseur de services et refus de l'accès aux services du fournisseur de services si la valeur reçue à partir du dispositif d'authentification ne correspond à aucune des valeurs calculées par ledit fournisseur de services.

8. Méthode de contrôle d'accès selon la revendication 3, **caractérisée en ce que** l'étape de transmission du résultat de la transformation dudit code d'identification personnel au fournisseur de services comporte une étape de copie de la réponse au "Challenge" sur un terminal connecté au fournisseur de services.

9. Méthode de contrôle d'accès selon la revendication 1, **caractérisée en ce qu'**un type de services comprend plusieurs services distincts.

10. Méthode de contrôle d'accès selon la revendication 1, **caractérisée en ce qu'**un type de services comprend un service.

11. Dispositif d'authentification pour le contrôle d'accès à un type de services spécifique parmi une pluralité de types de services proposés par un fournisseur de services, ce dispositif comportant au moins un processeur et une mémoire agencés pour mettre en oeuvre le procédé de la revendication 1.

## Patentansprüche

1. Zugangskontrollverfahren für einen bestimmten Typ von Diensten unter einer Vielzahl von vorgeschlagenen Typen von Diensten durch einen Diensteanbieter, wobei dieses Verfahren die folgenden Schritte umfasst:
• Einführung, in eine Authentifizierungsvorrichtung dieses Benutzers, eines benutzerspezifischem persönlichen Erkennungscodes, dieser persönliche Erkennungscode ist identisch für mindestens zwei verschiedene vom Diensteanbieter vorgeschlagene Typen von Diensten, die ausgehend von einem Typ von Diensten zugänglichen Dienste sind je nach den Rechten gruppiert, die notwendig sind, um auf diese Dienste zuzugreifen;
• Angabe, durch besagten Benutzer, des besagten bestimmten Typs von Diensten, für den der Zugang gefordert wird, diese Angabe erfolgt in der Authentifizierungsvorrichtung;
• Umwandlung des besagten persönlichen Erkennungscodes in der Authentifizierungsvorrichtung, abhängig von mindestens einer kryptografischen Funktion, die spezifisch für den besagten Benutzer und den besagte erforderlichen bestimmten Typ von Diensten ist, wobei diese kryptografische Funktion in der Authentifizierungsvorrichtung gespeichert wird;
• Übertragung des Ergebnisses der Umwandlung des besagten persönlichen Erkennungscodes an den Diensteanbieter;
• Authentifizierung des Benutzers durch den Diensteanbieter mittels des übertragenen Ergebnisses der besagten Umwandlung;
• Zuweisung oder Verweigerung der Zuweisung, durch den Diensteanbieter, des Zugangsrechtes für den besagten geforderten bestimmten Typ von Diensten je nach dem Ergebnis der Authentifizierung.

2. Zugangskontrollverfahren nach Anspruch 1, **dadurch gekennzeichnet, dass** besagte kryptografische Funktion mindestens einen Chiffrierschlüssel umfasst und einen Verschlüsselungsalgorithmus sowie dadurch, dass die Phase der Umwandlung des persönlichen Erkennungscodes abhängig von der kryptografischen Funktion die Verschlüsselung des besagten persönlichen Erkennungscodes durch diese kryptografische Funktion umfasst.

3. Zugangskontrollverfahren nach Anspruch 1, **dadurch gekennzeichnet, dass** es eine Phase der Einführung, in der Authentifizierungsvorrichtung, eines vom Diensteanbieter empfangenen "Challenge" umfasst, sowie dadurch, dass die Phase der Umwandlung des besagten persönlichen Erkennungscodes eine Phase der Berechnung einer Response umfasst, die von mindestens dem besagten persönlichen Erkennungscode abhängig ist, von besagter kryptografischer Funktion, die spezifisch für den besagten spezifischen Typ von Diensten ist, der von dem Benutzer ausgewählt wurde, und von dem besagten "Challenge".

4. Zugangskontrollverfahren nach Anspruch 1 oder 3, **dadurch gekennzeichnet, dass** das Ergebnis der Umwandlung eine Angabe enthält, die es dem Diensteanbieter ermöglicht, zu ermitteln, welcher spezifische Dienst von dem Benutzer ausgewählt wurde.

5. Zugangskontrollverfahren nach Anspruch 4, **dadurch gekennzeichnet, dass** die Phase der Authentifizierung des Benutzers durch den Diensteanbieter die folgenden Schritte umfasst:
• Ablesung der Angabe, die es dem Diensteanbieter ermöglicht, zu ermitteln, welcher spezifische Typ von Dienst von dem Benutzer ausgewählt wurde;
• Selektion, durch den Diensteanbieter, der kryptografischen Funktion, die für den besagten Benutzer und den besagten spezifischen Typ von Diensten spezifisch ist;
• Berechnung, durch den Diensteanbieter, der Umwandlung des besagten persönlichen Erkennungscodes mittels der ausgewählten kryptografischen Funktion;
• Vergleich des vom Diensteanbieter berechneten Wertes mit dem von der Authentifizierungsvorrichtung empfangenen Wert;
• Zugangsberechtigung zu dem besagten spezifischen Typ von Diensten, falls diese Werte gleich sind, und Verweigerung des Zugangs, falls diese Werte verschieden sind.

6. Zugangskontrollverfahren nach Anspruch 1 oder 3, **dadurch gekennzeichnet, dass** es die folgenden Schritte umfasst:
a) Berechnung durch den Diensteanbieter, der Umwandlung des besagten persönlichen Erkennungscodes mittels einer ersten kryptografischen Funktion, die spezifisch für den besagte Benutzer und den besagten spezifischen Typ von Diensten ist;
b) Vergleich des vom Diensteanbieter berechneten Wertes mit dem von der Authentifizierungsvorrichtung empfangenen Wert;
c) Zugangsberechtigung zu dem besagten spezifischen Typ von Diensten, falls diese Werte gleich sind;
• wenn diese Werte verschieden sind, Wiederholung der Phasen a) bis c) unter Benutzung einer anderen kryptografischen Funktion bei jeder Wiederholung;
• wenn keine der kryptografischen Funktionen, die für die vom Diensteanbieter vorgeschlagenen Typen von Diensten spezifisch sind, zu einer Gleichheit führt, Verweigerung des Zugangs zu den Diensten des Diensteanbieters.

7. Zugangskontrollverfahren nach Anspruch 1 oder 3, **dadurch gekennzeichnet. dass** es die folgenden Schritte umfasst:
• Berechnung, durch den Diensteanbieter, der Umwandlung des besagten persönlichen Erkennungscodes mittels der verschiedenen kryptografischen Funktionen, die spezifisch für den besagten Benutzer und für die besagten von besagtem Diensteanbieter vorgeschlagenen Typen von Diensten sind;
• Vergleich der vom Diensteanbieter berechneten Werte mit dem von der Authentifizierungsvorrichtung empfangenen Wert;
• Zugangsberechtigung zu dem besagten spezifischen Typ von Diensten, wenn der von der Authentifizierungsvorrichtung empfangene Wert einem der von besagtem Diensteanbieter berechneten Werten entspricht und Verweigerung des Zugangs zu den Diensten des Diensteanbieters, wenn der von der Authentifizierungsvorrichtung empfangene Wert keinem der von besagtem Diensteanbieter berechneten Werte entspricht.

8. Zugangskontrollverfahren nach Anspruch 3, **dadurch gekennzeichnet, dass** die Phase von Übertragung des Ergebnisses der Umwandlung des besagten persönlichen Erkennungscodes an den Diensteanbieter eine Phase des Kopierens der Response der "Challenge" auf einen mit dem Diensteanbieter verbundenen Terminal umfasst.

9. Zugangskontrollverfahren nach Anspruch 1, **dadurch gekennzeichnet, dass** ein Typ von Diensten mehrere verschiedene Dienste umfasst.

10. Zugangskontrollverfahren nach Anspruch 1, **dadurch gekennzeichnet, dass** ein Typ von Diensten einen Dienst umfasst.

11. Authentifizierungsvorrichtung für die Zugangskontrolle zu einem spezifische Typ von Diensten aus einer Vielzahl von von einem Diensteanbieter vorgeschlagenen Typen von Diensten, wobei diese Vorrichtung mindestens einen Prozessor umfasst und einen Speicher, der angeordnet ist, um das Verfahren nach Anspruch 1 umzusetzen.

## Claims

1. Method for controlling the access to a specific type of services among a plurality of type of services proposed by a service supplier, this method comprising the following steps comprising the following steps :
- entering, into an authentication device of this user, a personal identification code specific to this user, this personal identification code being identical for at least two different types of services proposed by the service supplier, the proposed services from one type of service being grouped as a function of the necessary rights to access these services;
- indication, by said user, of said specific type of services for which the access is required, this indication being made in the authentication device;
this method being **characterized in that** it furthermore includes the steps of:
- transformation of said personal identification code in the authentication device, in a way depending on at least one cryptographic function specific to said user and to said required specific type of services, this cryptographic function being memorized in the authentication device;
- transmission of the result of the transformation of said personal identification code to the service supplier;
- user authentication by the service supplier, by means of the transmitted result of said transformation;
- assignation or refusal of assignation, by the service supplier, of the access right to said specific type of services required according to the result of the authentication.

2. Method for controlling the access according to claim 1, **characterized in that** said cryptographic function includes at least one encryption key and one encryption algorithm and **in that** the transformation step of the personal identification code depending on the cryptographic function includes the encryption of said personal identification code by this cryptographic function.

3. Method for controlling the access according to claim 1, **characterized in that** it includes a step of introduction, into the authentication device, of a "Challenge" received by the service supplier, and **in that** the transformation step of said personal identification code includes a step of calculation of a response which depends at least on said personal identification code, on said cryptographic function specific to said specific type of service selected by the user and on said "Challenge".

4. Method for controlling the access according to claim 1 or 3, **characterized in that** the result of the transformation contains an indication allowing the service supplier to determine which specific service has been selected by the user.

5. Method for controlling the access according to claim 4, **characterized in that** the step of user authentication by the service supplier includes the following steps of:
- reading the indication allowing the service supplier to determine which specific type of services has been selected by the user;
- selection, by the service supplier, of the cryptographic function specific to said user and to said specific type of services;
- calculation, by the service supplier, of the transformation of said personal identification code by means of the selected cryptographic function;
- comparison of the value calculated by the service supplier with the value received from the authentication device;
- access authorization to said specific type of service if these values are equal, and access refusal if these values are different.

6. Method for controlling the access according to claim 1 or 3, **characterized in that** it includes the following steps of:
a) calculation, by the service supplier, of the transformation of said personal identification code by means of a first cryptographic function specific to said user and to said specific type of services;
b) comparison of the value calculated by the service supplier with the value received from the authentication device;
c) access authorization to said specific type of services if these values are equal;
- if these values are different, reiteration of steps a) to c) using a different cryptographic function during each iteration;
- if none of the cryptographic functions specific to the types of services proposed by the service supplier leads to an equality, refusal of access to the services of the service supplier.

7. Method for controlling the access according to claim 1 or 3, **characterized in that** it includes the following steps of:
- calculation, by the service supplier, of the transformation of said personal identification code by means of the different cryptographic functions specific to said user and to said service types proposed by said service supplier;
- comparison of the values calculated by the service supplier and the value received from the authentication device;
- authorization of access to said specific type of services if the value received from the authentication device corresponds to one of the values calculated by said service supplier, and refusal of the access to the services of the service supplier if the value received from the authentication device does not correspond to any of the values calculated by said service supplier.

8. Method for controlling the access according to claim 3, **characterized in that** the step of transmission of the result of the transformation of said personal identification code to the service supplier includes a step of copying the response to the "Challenge" on a terminal connected to the service supplier.

9. Method for controlling the access according to claim 1, **characterized in that** a type of services includes several different services.

10. Method for controlling the access according to claim 1, **characterized in that** a type of services includes one service.

11. Authentication device for controlling the access to a specific type of services among a plurality of types of services proposed by a service supplier, this device including at least one processor and a memory arranged for carrying out the method of the claim 1.
